# EUROPEAN PATENT APPLICATION

(11) **EP 2 042 038 A1**
(43) Date of publication of application: **01.04.2009**
(21) Application number: 08010313.8
(22) Date of filing: 06.06.2008
(51) Int. Cl.: A21D 13/00, A23L 1/00

(54) **Salty baked food product and process for its preparation**

(30) Priority: 27.07.2007 IT MI20071519
(71) Applicant: G.M. Piccoli S.r.l., 24022 Alzano Lombardo (BG) (IT)
(72) Inventor: Piccoli, Mauro, 24022 Alzano Lombardo BG (IT)
(74) Representative: Trupiano, Federica

(57) **Abstract**

Single serving or single portion bakery food product, comprising a laminated dough chosen from puff pastry, semi-puff pastry, leavened puff or leavened semi-puff pastry (leavened laminated dough), and at least one savoury filling such as first courses with various seasonings, second courses and/or suitably flavoured side dishes.

## Description

### SUBJECT MATTER OF THE INVENTION

The present invention relates to a bakery food product and a process for the preparation thereof.

### STATE OF THE ART

The bakery food product sector is expanding significantly and has always been of considerable interest for industries operating in the food sector. In particular, a part of these bakery food products is intended for consumption at breakfast, i.e. brioches, croissants and the like, also defined as "sweet" products; while another part consists of products defined as "savoury", such as for example pizzas, savoury pies, panzarotti, focaccia and the like; or consists of first courses, main courses and side dishes.

Normally, the "sweet" products, indicated above, are produced with a puff or semi-puff pastry, according to the quantity of butter or margarine used to prepare the dough base, and provided with a filling, based on fruit jam or creams and the like.

In the gastronomic field of "savoury" products there are known, and used widely, products such as savoury biscuits, pizzas, savoury pies, panzarotti and the like, cooked directly and subsequently packaged or sent for immediate consumption, or frozen uncooked to be cooked subsequently. Alternatively, the product can also be part by cooked and frozen, to then undergo final cooking subsequently, at the time of consumption.

"Savoury" food products also include all those foods indicated as first courses, i.e. foods based on flour, rice, barley seasoned with condiments or sauces or as second courses, based on meat or fish, or as side dishes with various seasonings and flavourings. These products can be cooked according to conventional methods (boiling, bain-marie, braising, stewing, steaming, frying, pan-cooking) to subsequently undergo a further operation of cooking, heating or "grilling" in the oven, or be cooked directly through exposure to a heat source in the oven.
There is the need for food products intended as first courses, second courses or side dishes to be contained and/or enclosed in supporting elements, such as containers made of metal, earthenware, glass, or of plastic and the like, during the conventional or oven cooking stages.
The need to be placed in any support or element suitable to contain them is dictated by the physical properties of these products, which are a combination of ingredients that are amalgamated, mixed or bound together. "Savoury" bakery products other than pizza, focaccia and the like, for example defined as single serving or single portion products, created as a snack or meal to substitute a main meal such as lunch or dinner and therefore often consumed in situations that are awkward or in any case require quick consumption times, present the common limit of requiring a support during cooking or heating thereof. If the support is provided together with the single serving portion, it is usually somewhat impractical and awkward with respect to the destination and final use of the product.
Therefore, there is the problem of producing and providing products intended for "quick" use and/or for consumption in awkward situations, which can be consumed without requiring, during the cooking and/or consumption phase, a rigid support or, in any case, an non-edible support of any nature, such as tubs, containers or the like, so that no waste product is linked to consumption of these products.

### OBJECTS OF THE INVENTION

The object of the present invention is to provide a bakery food product that is composed of a laminated dough and of at least one savoury filling which, after cooking, does not result in any waste products.

Another object of the present invention is to provide a bakery food product composed of a laminated dough and of at least one savoury filling which does not require any additional support made of metal, earthenware, glass, or of plastic and the like.

Yet another object of the present invention is to provide a bakery food product that is tasty, appetizing, rich and which, after cooking and/or heating, retains the organoleptic properties of its main ingredients.

A further object of the present invention is to provide a process for the preparation of a bakery food product composed of a laminated dough and of at least one savoury filling.

Yet a further object of the present invention is to provide a single serving or single portion bakery food product composed of a laminated dough and of at least one savoury filling.

### DESCRIPTION

These and yet other objects and relative advantages which will be more apparent from the description below, are achieved by a bakery food product comprising a laminated dough base and at least one savoury filling.

According to the present invention, said bakery food product is a single serving or single portion product, wherein said laminated dough is chosen from puff pastry, semi-puff pastry and leavened puff or leavened semi-puff pastry (leavened laminated dough), while said savoury filling can comprise first courses with various seasonings, second courses and/or side dishes.

According to the present invention, the term first courses is intended as foods based on flour, rice, barley seasoned with condiments or sauces, the term second courses is intended as foods based on meat or fish and the term side dishes is intended as vegetable based foods with various seasonings and flavourings.

In particular, the laminated dough base constitutes from 50% to 80% in weight of the uncooked finished product, while the filling constitutes from 20% to 50% in weight of the uncooked finished product. More in particular, the laminated dough base constitutes from 60% to 70% in weight of the uncooked finished product, while the filling forms from 30% to 40% in weight of the uncooked finished product.

More preferably, according to one of the preferred embodiments of the present invention, the laminated dough base constitutes 65% of the uncooked finished product, while the filling constitutes 33% of the uncooked finished product.

According to the present invention, laminated dough is intended as a puff pastry, with a content of butter or margarine ranging from 30% to 60%, or a semi-puff pastry, with a butter or margarine content ranging from 10% to 30%. Yeast can be added to both the aforesaid puff and semi-puff pastries, and in this case they are defined in the present description as leavened laminated doughs.

The product according to the finding is composed of a savoury filling, for example based on pasta or rice variously seasoned with condiments or sauces, or based on meat or fish and/or side dishes. The types of filling will be enclosed in or generically combined with the laminated dough forming the base of the product according to the invention.

The savoury filling is preferably previously cooked according to one of the known conventional methods, and subsequently enclosed in or generically combined with the uncooked laminated dough forming the base of the product according to the invention. Said savoury filling can also be combined uncooked with the laminated dough base.

Therefore, the bakery product according to the present invention is represented by a single serving or single portion product, composed of a previously cooked or uncooked savoury filling, generically combined with the laminated dough. The bakery product according to the present invention is a single-serving product, which is preferably prepared and frozen uncooked. At the time of consumption, it advantageously undergoes complete cooking, providing a product having numerous advantages with respect to similar products according to prior art. Again according to the invention, the aforesaid bakery product can also be cooked directly to be subsequently preserved or to be consumed directly.

The ratios between laminated dough and savoury filling according to the invention are particularly significant, as they allow the production of a bakery product characterized by an outer shell or base in laminated dough, tasty and rich and which can even be relatively thin, for example, around 2 mm thick, without this affecting the positive organoleptic properties of the product. At the same time, although produced with a smaller quantity of laminated dough, the product is characterized by a rich filling, with significant properties of softness and volume.

Following the cooking operations, the bakery product according to the invention has a particularly inviting appearance as it is "puffed up", crispy and "golden" on the surface and has a tasty, rich and soft filling, obtaining a combination of sensations that are pleasing to the palate. According to a variant of the present invention, the filling inside the laminated dough can ooze slightly from the cuts or from openings of different shapes that can be present on the surface of the product. Moreover, the product can have any useful shape suitable to contain the savoury filling, for example, it can be rectangular, triangular, etc. in shape, can be decorated externally with cuts or slits; its surface can also be sprinkled with glazing products and/or seeds or grains of various type and/or dimension.

Moreover, the bakery product according to the invention can be preserved, after the cooking operation, for 24-36 hours at a refrigeration temperature ranging from 4-6°C and, if required, heated before consumption. After the heating operation, the bakery product according to the invention retains, its initial properties of fragrance and crispiness of the puff (or semi-puff) pastry and the organoleptic properties of the savoury filling, and is in any case appealing to the consumer.

To the taste, the product is fragrant on the outside and richly seasoned and tasty on the inside, due to the savoury filling present, which is composed, for example, of first courses such as pasta, rice or barley with various seasonings; or of second courses of meat or fish and/or richly flavoured side dishes.

According to the finding, a countless number of bakery food products can thus be created, in particular single serving or single portion products, for example varying the shape of the outer shell, by varying the quality of puff pastry, increasing or decreasing the percentage of margarine or butter for lamination, optionally also adding yeast, i.e., as already mentioned, using leavened laminated doughs, to obtain a less crispy and softer product, varying the type of filling and also adding other edible ingredients, flavourings, colorants (for example spices and the like), obtaining excellent results.

The range of single serving bakery food products that can be developed, according to the finding, represents a favourable and delicious alternative to the bakery products that substitute a meal present on the market, such as rolls, pizzas and the like. In fact, the single serving bakery food products that can be produced according to the finding satisfy the nutritional requirements of a conventional meal due to the presence in the filling of first courses, second courses and/or side dishes, but can be consumed in different situations of daily life due to their simple and versatile use.

The bakery food product according to the present invention is prepared following the process outline indicated below.
□ Preparation of the laminated dough base (puff or semi-puff pastry, optionally leavened) according to conventional method
□ Preparation of the savoury filling
□ Optional cooking of the filling
□ Lamination of the puff pastry to the desired thickness
□ Cutting of the puff pastry into different shapes according to the shape to be given to the finished product, with the addition of optional decorative cut
□ Dosing of the filling
□ Folding or laying of the pastry to form the final shape of the product
□ Optional surface decoration
□ Optional pre-leavening
□ Cooking and packaging or alternatively
□ Freezing and packaging

According to the invention, the laminated dough base is prepared with conventional methods that entail, for example, preparation of the mixture, addition of the necessary quantity of margarine or butter, folding of the dough thus obtained and leaving it to rest.

Again according to the finding, a preferred shape of the bakery food product is rectangular, optionally decorated externally with cuts and/or slits. The surface decoration can, for example, be implemented by sprinkling the surface of the product with glazing food products, seeds, flaked or grated cheese and similar garnishings.

Again according to the finding, once the preparatory process has terminated, the product can be frozen and packaged, to be cooked subsequently at the time of consumption, or it can be cooked directly and packaged, to be directly consumed.

With regard to the preservation methods, if frozen the product can be kept for at least 12 - 18 months at a temperature of -18°C, while after cooking it must be kept at a temperature of 4-6°C according to conventional methods and should be consumed within 24 - 36 hours.

With regard to cooking, no particular cooking system is required, as any equipment currently existing and used for similar bakery products is suitable. The description above will be more clearly indicated with the aid of the practical embodiments below, provided purely by way of non-limiting examples of the present finding.

### EXAMPLE 1

Example of low weight product, obtained with a laminated dough base and a savoury filling composed of first courses, second courses and/or side dishes or the like.

| | **min. g.** | **% of shell** | **% of total** |
|---|---|---|---|
| puff pastry | 60 | | 65 |
| filling | 30 | 50 | 33 |
| | | | |
| | | | |

### EXAMPLE 2

Example of product of medium weight, produced with a laminated dough base and a savoury filling composed of first courses, second courses and/or side dishes or the like.

| | **med. g.** | **% of shell** | **% of total** |
|---|---|---|---|
| puff pastry | 80 | | 65 |
| filling | 40 | 50 | 33 |
| | | | |
| | | | |

### EXAMPLE 3

Example of product of high weight, produced with a laminated dough base and a savoury filling composed of first courses, second courses and/or side dishes or the like.

| | **max. g.** | **% of shell** | **% of total** |
|---|---|---|---|
| puff pastry | 120 | | 65 |
| filling | 60 | 50 | 33 |
| | | | |
| | | | |

### EXAMPLE 4

### Example of typical composition of a laminated dough base and a savoury filling

| puff pastry recipe | | | filling recipe 1 | |
|---|---|---|---|---|
| flour 00 | 64.0% | | rice | 0. 350g |
| water | 33.4% | | mushrooms | 0.300g |
| malt | 0.5% | | Salt | as required |
| salt | 1.1 % | | Pepper | as required |
| butter | 0.9% | | parsley | 1 pinch |
| | | | shallots | 2 small |
| | 100% | | vegetal broth | approx 1 litre |
| lamination | | | | |
| margarine | 47.1 % | | butter | 0.050g |
| | | | Parmesan cheese | 0.200g |

### EXAMPLE 5

Example of typical composition of a laminated dough base of the type according to example 4 and of a savoury filling

| filling recipe | |
|---|---|
| 2 | |
| mini garganelli | |
| pasta | 0.350g |
| olive oil | 0.150g |
| garlic | 2 cloves |
| salmon | 0.250g |
| asparagus | 0.200g |
| pulped tomato | 0.500g |
| salt | as required |
| pepper | as required |
| parsley | a pinch |
| white wine | 1/2 glass |

### EXAMPLE 6

Example of typical composition of a laminated dough base of the type according to example 4 and of a savoury filling

| filling recipe | |
|---|---|
| 3 | |
| Trofie pasta | 0.350g |
| Pesto sauce | 0.350g |
| French beans | 0.400g |
| butter | 0.100g |
| Parmesan | |
| cheese | 0.200g |
| Cooking cream | 0.250g |
| salt | as required |

### EXAMPLE 7

### Example of typical composition of a laminated dough base of the type according to example 4 and of a savoury filling

| filling recipe | |
|---|---|
| 4 | |
| pasta shells | 0.350g |
| garlic | 2 cloves |
| courgette | 0.300g |
| aubergine | 0.200g |
| capers | 0.030g |
| black olives | 0.060g |
| green olives | 0.060g |
| basil | 8 leaves |
| salt | as required |
| pepper | as required |
| white wine | 1/2 glass |
| pulped tomato | 0.500 g |

### EXAMPLE 8

### Example of description of the rectangular shaped finished product

The product has a rectangular shape with dimensions before cooking of 50-60 mm in width by 160 mm in length by 30-40 mm in height. It is composed of a thin layer of puff pastry measuring 130 x 160 x 2 mm in depth, weighing approximately 80 g, folded over itself to overlap the edges in the direction of length by 35-40 mm. Inside it contains approximately 40 g of savoury filling of any type. The product can be decorated externally with cuts or slits and the surface can be sprinkled with glazing food products and/or seeds or grains of various type and dimension.

## Claims

1. Bakery food product comprising a laminated dough base and at least one savoury filling.

2. Bakery food product as claimed in claim 1, **characterized in that** said laminated dough is chosen from: puff pastry, semi-puff pastry and leavened puff pastry or leavened semi-puff pastry.

3. Product as claimed in claim 1, **characterized in that** said savoury filling is chosen from pasta, rice, barley variously seasoned with condiments and/or sauces.

4. Product as claimed in claim 1, **characterized in that** said savoury filling is chosen from meat, fish, suitably flavoured side dishes.

5. Product as claimed in claim 1, **characterized in that** said savoury filling is previously cooked.

6. Product as claimed in claims 1-5, **characterized in that** it is a single serving/single portion product.

7. Product as claimed in claim 1, **characterized in that** said laminated dough base constitutes from 50% to 80% in weight of the uncooked finished product, and said savoury filling constitutes from 20% to 50% in weight of the uncooked finished product.

8. Product as claimed in claim 1, **characterized in that** it is frozen uncooked.

9. Product as claimed in claim 1, **characterized in that** it is cooked.

10. Product as claimed in claim 2, **characterized in that** it has the following composition:
| | **% in weight of total** |
|---|---|
| puff pastry | 65% |
| filling | 33% |
| decoration | 2% |
| | **100%** |

11. Product as claimed in claim 1, **characterized in that** said laminated dough has the following composition:
| puff pastry recipe | |
|---|---|
| flour 00 | 64.0% |
| water | 33.4% |
| malt | 0.5% |
| salt | 1.1% |
| butter | 0.9% |
| | 100% |
| lamination margarine | 47.1% |

12. Process for the preparation of a bakery food product as claimed in claims 1 or 2, **characterized in that** it comprises the following steps:
- preparation of said laminated dough
- preparation of said savoury filling
- optional prior cooking of said filling
- lamination of said puff pastry to the desired thickness
- cutting of said puff pastry into different shapes according to the shape to be given to the finished product
- optional decorative cut
- dosing of said savoury filling
- folding or laying of said laminated dough to form the final shape of the product
- optional surface decoration
- optional pre-leavening
- cooking and packaging or alternatively
- freezing and packaging.

13. Process as claimed in claim 14, **characterized in that** said laminated dough is prepared according to a method that comprises preparation of the mixture, addition of the required quantity of margarine or butter, at least a step to fold the laminated dough thus obtained and leave it to rest.

14. Product as claimed in claim 1, **characterized in that** it is rectangular in shape.

15. Product as claimed in claim 1, **characterized in that** it is decorated on the surface with cuts and/or slits and/or by sprinkling the surface of said product with glazing food products, seeds, grains.

16. Product as claimed in claim 1 or 2, **characterized in that** it has a rectangular shape with dimensions (uncooked) of 50-60 mm in width by 160 mm in length by 30-40 mm in height, said layer of laminated dough measuring 130 x 160 x 2 mm in depth, weighing approximately 80 g, folded over itself to overlap the edges in the direction of length by 35-40 mm and containing inside approximately 40 g of said savoury filling.
